# EUROPÄISCHE PATENTSCHRIFT

(11) **EP 4 638 093 B1**
(45) Veröffentlichungstag und Bekanntmachung des Hinweises auf die Patenterteilung: **04.11.2026**
(21) Anmeldenummer: 23836739.5
(22) Anmeldetag: 18.12.2023
(51) Int. Cl.: B29C 63/00, B65B 55/08, B65B 55/10

(54) **ABFÜLLANLAGE FÜR FLÜSSIGE, PASTÖSE ODER FESTE PRODUKTE, INSBESONDERE LEBENSMITTEL, MIT ZUMINDEST EINER LAMINIEREINHEIT SOWIE EIN ENTSPRECHENDES VERFAHREN**
FILLING PLANT FOR LIQUID, PASTY OR SOLID PRODUCTS, IN PARTICULAR FOOD, HAVING AT LEAST ONE LAMINATING UNIT, AND A CORRESPONDING METHOD
INSTALLATION DE REMPLISSAGE POUR PRODUITS LIQUIDES, PÂTEUX OU SOLIDES, EN PARTICULIER DES ALIMENTS, AYANT AU MOINS UNE UNITÉ DE STRATIFICATION, ET PROCÉDÉ CORRESPONDANT

(30) Priorität: 21.12.2022 DE 102022134321
(43) Veröffentlichungstag der Anmeldung: 29.10.2025
(73) Patentinhaber: Ampack GmbH, 86343 Königsbrunn (DE)
(72) Erfinder: KLEIN, Ilona, 85375 Neufahrn bei Freising (DE); SCHOBEL, Elmar, 78628 Rottweil (DE); SELINGER, Gebhard, 73547 Lorch (DE); SCHMID, Christian, 86157 Augsburg (DE)
(74) Vertreter: Daub, Thomas
(86) Internationale Anmeldenummer: PCT/EP2023/086434
(87) Internationale Veröffentlichungsnummer: WO 2024/133127

(56) Entgegenhaltungen:
- EP-A2- 0 261 929
- WO-A1-2008/004930

## Beschreibung

### Stand der Technik

Die Erfindung betrifft eine Abfüllanlage sowie ein entsprechendes Verfahren zu einem Abfüllen von flüssigen, pastösen oder festen Produkten, insbesondere Lebensmitteln, in Behälter, insbesondere Becher.

Aus DE 10 2012 213 079 A1, EP 1 048 746 B1, EP 2 518 102 A2 und EP 3 257 966 A1 sind bereits Abfüllanlagen mit zumindest einer Beschichtungseinheit zu einer zumindest einseitigen Beschichtung von Behältern sowie entsprechende Verfahren bekannt. Die bereits bekannten Abfüllanlagen sowie bereits bekannten Verfahren können eine lange Prozesszeit aufweisen, insbesondere bedingt durch eine Trocknungszeit einer aufgetragenen Beschichtung vor einem Befüllen von beschichteten Behältern, da die aufgetragene Beschichtung lediglich passiv getrocknet wird, d.h. über die Zeit. Zudem kann es bei den bereits bekannten Beschichtungsvorrichtungen, Abfüllanlagen sowie Verfahren zu einem unerwünschten Beschichtungsproduktaufbau innerhalb der Beschichtungsvorrichtung und/oder der Abfüllanlage kommen, insbesondere infolge eines ungenügenden bzw. nicht vorhandenen Abschottens der Beschichtungsvorrichtung, so dass häufig Reinigungszyklen durchgeführt werden müssen, was ebenfalls einen Nachteil in Bezug auf die Prozesszeit darstellen kann, da es häufig zu unerwünschten Maschinenstopps zur Durchführung einer Reinigung kommen kann. Zudem kann es bei Hinterschneidungen an den Behältern zu ungenügenden Beschichtungen an den Hinterschneidungen kommen, wodurch nach einer Beschichtung Keimrückstände an den Hinterschneidungen vorhanden sein können, die zu einer unerwünschten Verunreinigung der in die Behälter abgefüllten Produkte führen können.

Ferner ist aus DE 198 28 381 A1 bereits eine Abfüllanlage mit zumindest einer Abfülleinheit zu einem Füllen von Behältern mit Produkten, mit zumindest einer Transporteinheit zu einem Transport der Behälter entlang einer Transportrichtung der Transporteinheit und mit zumindest einer Laminiereinheit zu einem zumindest einseitigen Laminieren von Behältern, die, betrachtet entlang der Transportrichtung, vor der Abfülleinheit angeordnet ist, bekannt.

Zudem ist aus EP 0 261 929 A2 eine Verpackungsmaschine zu einem Abpacken von Produkten, insbesondere Lebensmittel, mit zumindest einer Abpackeinheit zu einem Bestücken von Behältern mit jeweils einem Produkt, mit zumindest einer Transporteinheit zu einem Transport der Behälter entlang einer Transportrichtung der Transporteinheit, insbesondere zumindest zu einem Zuführen der Behälter zur Abpackeinheit, und mit zumindest einer Laminiereinheit zu einem zumindest einseitigen, insbesondere innenseitigen, Laminieren von Behältern, die, betrachtet entlang der Transportrichtung, vor der Abpackeinheit angeordnet ist. Des Weiteren umfasst die bereits bekannte Verpackungsmaschine eine Sterilisierungseinheit, die dazu vorgesehen ist, die verschlossenen Behälter zu sterilisieren.

Die Aufgabe der Erfindung besteht insbesondere darin, eine gattungsgemäße Abfüllanlage sowie ein gattungsgemäßes Verfahren mit verbesserten Eigenschaften hinsichtlich einer Prozessgeschwindigkeit und/oder einer Kontaminationsvermeidung bereitzustellen. Die Aufgabe wird erfindungsgemäß durch die Merkmale des Anspruchs 1 bzw. des Anspruchs 5 gelöst, während vorteilhafte Ausgestaltungen und Weiterbildungen der Erfindung den Unteransprüchen entnommen werden können.

### Offenbarung der Erfindung

Die Erfindung geht aus von einer Abfüllanlage für flüssige, pastöse oder feste Produkte, insbesondere Lebensmittel, mit zumindest einer Abfülleinheit zu einem Füllen von Behältern, insbesondere Bechern, mit flüssigen, pastösen oder festen Produkten, mit zumindest einer Transporteinheit, insbesondere Packmittelträgereinheit, zu einem Transport der Behälter entlang einer Transportrichtung der Transporteinheit, insbesondere zumindest zu einem Zuführen der Behälter zur Abfülleinheit, und mit zumindest einer Laminiereinheit zu einem zumindest einseitigen, insbesondere innenseitigen, Laminieren von Behältern, insbesondere Bechern, die, betrachtet entlang der Transportrichtung, vor der Abfülleinheit angeordnet ist.

Es wird vorgeschlagen, dass die Abfüllanlage zumindest eine Entkeimungseinheit umfasst, die der Laminiereinheit zugeordnet ist und dazu vorgesehen ist, eine mittels der Laminiereinheit verarbeitbare Folie vor einem Aufbringen der Folie auf eine Innenseite der Behälter zu entkeimen, wobei die Entkeimungseinheit, insbesondere zumindest ein Entkeimungselement der Entkeimungseinheit, entlang einer Folientransportrichtung der Folie in einem Bereich zwischen einer Folienrolle und einem Laminierwerkzeug der Laminiereinheit angeordnet ist. Mittels der erfindungsgemäßen Ausgestaltung kann vorteilhaft eine kurze Gesamtprozesszeit zu einem, insbesondere innenseitigen, Laminieren von Behältern und insbesondere einem daran anschließenden Befüllen sowie Versiegeln der Behälter ermöglicht werden. Es kann vorteilhaft bei einer Herstellung von Behältern auf einen Herstellungsschritt, insbesondere einen Beschichtungs- und/oder Laminierschritt, verzichtet werden. Es kann besonders vorteilhaft einer bei einem Transport oder bei einer Lagerung von hergestellten Behältern möglichen Kontamination entgegengewirkt werden, insbesondere da ein Laminieren und/oder eine Entkeimung erst vor einem Abfüllen eines Produkts innerhalb der Abfüllanlage durchgeführt werden können/kann. Es kann vorteilhaft im Bereich von Falzen, Nähten, Hinterschneidungen o. dgl. durch ein Laminieren, insbesondere mit einer zuvor entkeimten Folie, eine hohe Abtötungsrate von Keimen ermöglicht werden und es können unerwünschte Kontaminationen in den Bereichen von Falzen, Nähten, Hinterschneidungen o. dgl. weitestgehend vermieden werden, wobei eine weitestgehend direkte Weiterverarbeitung der Behälter nach einem Laminieren ermöglicht werden kann. Es kann vorteilhaft eine Beschädigung einer Laminierung/einer Schutzschicht an einer Innenseite der Behälter bei einem Entstapeln oder bei einem Vereinzeln der Behälter, insbesondere während einer Übergabe von einer Behälterzuführeinheit der Abfüllanlage zur Transporteinheit, vermieden werden, insbesondere da die Laminierung/die Schutzschicht an der Innenseite der Behälter erst nach einer Übergabe angeordnet/aufgebracht wird.

Die Laminiereinheit ist bevorzugt dazu vorgesehen, die Behälter, insbesondere zumindest innenseitig, mit einer Folie zu versehen, die eine Barriereschicht bildet, insbesondere eine Barriereschicht gegenüber Wasserdampf, Sauerstoff, UV-Licht, Fett, Säure, Aroma o. dgl. auf eine, einem Fachmann bereits bekannte Art und Weise bildet. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die Folie kann als zugeschnittene oder zurechtgestanzte Folie oder als bahnförmige Folie der Laminiereinheit zugeführt werden. Die Laminiereinheit kann zu einer Innen- und/oder Außenlaminierung der Behälter mit der Folie vorgesehen sein. Besonders bevorzugt ist die Laminiereinheit als Innenlaminiereinheit ausgebildet, die dazu vorgesehen ist, eine Innenseite der Behälter mit einer Folie zu versehen. Es ist jedoch auch alternativ denkbar, dass die Laminiereinheit dazu vorgesehen ist, eine Außenseite oder eine Innen- sowie eine Außenseite der Behälter mit einer Folie zu versehen. Bei einem Versehen der Außenseite des Behälters ist es denkbar, dass lediglich ein oberer Außenbereich, der einen maximalen Abstand von insbesondere weniger als 30 mm, bevorzugt weniger als 20 mm und ganz besonders bevorzugt weniger als 16 mm ausgehend von einem, insbesondere oberen Siegelrand des Behälters, insbesondere an dem ein Verschluss ansiegelbar ist, in Richtung eines Bodens des Behälters betrachtet, mit einer Folie versehen ist/wird. Der obere Außenbereich könnte auf ca. 15 mm von oben beschränkt sein. Die Laminiereinheit ist vorzugsweise als Thermoformeinheit ausgebildet. Es ist jedoch auch denkbar, dass die Laminiereinheit eine andere, einem Fachmann als sinnvoll erscheinenden Ausgestaltung aufweist. Bevorzugt ist die Laminiereinheit in oder an einer Gehäuse- und/oder Rahmeneinheit der Abfüllanlage angeordnet, insbesondere in einer Linie mit weiteren Arbeitsstationen der Abfüllanlage. Die Laminiereinheit bildet bevorzugt ein Modul, insbesondere eine Arbeitsstation der Abfüllanlage. Die Laminiereinheit kann eine Hebeeinheit aufweisen, um ein Herausheben der Behälter aus einem Packmittelträger der Abfüllanlage zu ermöglichen. Die Hebeeinheit ist vorzugsweise unterhalb des Packmittelträgers angeordnet. Bevorzugt weist die Laminiereinheit eine, einem Fachmann bereits bekannte Ausgestaltung auf. Vorzugsweise umfasst die Laminiereinheit und/oder die Abfüllanlage eine Steuer- oder Regeleinheit zu einer Steuerung oder Regelung des Laminierprozesses und/oder weiterer Prozesse. Mittels der Steuer- oder Regeleinheit sind bevorzugt Parameter für die Prozesse individuell durch einen Bediener vorgebbar, insbesondere auf eine, einem Fachmann bereits bekannte Art und Weise. Unter einer "Steuer- oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden.

Die Behälter, die mittels der Laminiereinheit zumindest einseitig mit einer Folie versehen werden, können jegliche, einem Fachmann als sinnvoll erscheinende Ausgestaltungen aufweisen. Bevorzugt sind die Behälter als Becher, als Schalen o. dgl. ausgebildet. Insbesondere weisen die Behälter eine konische Innenform auf. Vorzugsweise sind die Behälter als Kunststoffbehälter oder als Papierbehälter, insbesondere Papierbecher, ausgebildet. Denkbar ist, dass die Behälter als papierbasierte Behälter ausgebildet sind, die beispielsweise mittels eines so genannten gerollten Verfahrens hergestellt sind oder die mittels eines Papier-Faserguss-Verfahrens hergestellt sind. Es ist jedoch auch denkbar, dass die Behälter aus einem anderen, einem Fachmann als sinnvoll erscheinenden Werkstoff hergestellt sind, wie beispielsweise aus einem kompostierbaren Werkstoff, aus einem Metall o. dgl. Die Behälter können sortenrein aus einem einzelnen Werkstoff hergestellt sein oder die Behälter können aus verschiedenen Werkstoffen hergestellt sein, wie beispielsweise aus unterschiedlichen Werkstoffschichten o. dgl. Die Behälter können jegliche, einem Fachmann als sinnvoll erscheinende Grundform aufweisen, wie beispielsweise polygonal, rund, elliptisch, eine Kombination aus verschiedenen Formen o. dgl. Bevorzugt sind die Behälter als Lebensmittelbehälter ausgebildet, insbesondere als konische Becher. Die Behälter sind vorzugsweise dazu vorgesehen, mit Lebensmitteln befüllt zu werden. Insbesondere sind die Behälter derart ausgebildet, dass die Behälter nach einem Befüllen infolge eines Siegelvorgangs verschließbar sind, wie beispielsweise infolge eines Siegelns einer Deckelfolie an die Behälter o. dgl.

Bevorzugt umfasst die Abfüllanlage die Transporteinheit, insbesondere eine Packmittelträgereinheit, zumindest zu einem Transport der Behälter durch die Laminiereinheit und durch die Abfülleinheit. Bevorzugt umfasst die Transporteinheit den Packmittelträger, insbesondere ein Packmitteltransportband. Es ist jedoch auch denkbar, dass die Transporteinheit alternativ oder zusätzlich zum Packmittelträger, insbesondere alternativ oder zusätzlich zum Packmitteltransportband, weitere, einem Fachmann als sinnvoll erscheinende Transport- oder Förderelemente umfasst, wie beispielsweise zumindest einen Kettenförderer, zumindest einen mehrachsigen Roboter, zumindest einen Vakuumgreifer, zumindest ein elektrodynamisches Förderelement o. dgl. Bevorzugt ist die Transporteinheit, insbesondere der Packmittelträger, zu einem Transport der Behälter durch die gesamte Abfüllanlage vorgesehen. Vorzugsweise ist die Transporteinheit, insbesondere der Packmittelträger, zu einem Transport der Behälter von Arbeitsstation zu Arbeitsstation der Abfüllanlage vorgesehen, insbesondere weitestgehend entnahmefrei aus dem Packmittelträger.

Des Weiteren wird vorgeschlagen, dass die Abfüllanlage zumindest eine Behälterzuführeinheit zu einer Zuführung von, insbesondere unlaminierten, Behältern zur Transporteinheit umfasst, wobei die Behälterzuführeinheit, betrachtet entlang der Transportrichtung der Transporteinheit, vor der Laminiereinheit angeordnet ist. Die mittels der Behälterzuführeinheit der Transporteinheit zuführbaren, insbesondere innenseitig unlaminierten, Behälter, sind mittels der Transporteinheit, insbesondere direkt, der Laminiereinheit zuführbar. Die Laminiereinheit ist bevorzugt entlang der Transportrichtung der Transporteinheit direkt nachfolgend an die Behälterzuführeinheit angeordnet. Es ist jedoch auch denkbar, dass in einer alternativen Ausgestaltung der Abfüllanlage, eine Puffereinheit zu einem Puffern von zugeführten Behältern, betrachtet entlang der Transportrichtung der Transporteinheit, zwischen der Behälterzuführeinheit und der Laminiereinheit angeordnet ist. Weitere, einem Fachmann als sinnvoll erscheinende Anordnungen der Behälterzuführeinheit, der Laminiereinheit und/oder weiterer Arbeitsstationen sind ebenfalls denkbar. Vorzugsweise sind die Behälter, die mittels der Behälterzuführeinheit der Transporteinheit zuführbar sind/zugeführt werden, zumindest innenseitig unlaminiert - das heißt insbesondere ohne Innenfolie - ausgebildet. Es ist jedoch auch denkbar, dass die Behälter bereits eine Innenbeschichtung oder eine Innenfolie aufweisen und mittels der Laminiereinheit eine zusätzliche Innenlaminierung, insbesondere Innenfolierung, erhalten. Die Behälterzuführeinheit ist bevorzugt zu einer, insbesondere automatischen, Bestückung der Transporteinheit, insbesondere des Packmittelträgers mit Behältern vorgesehen. Die Behälterzuführeinheit ist vorzugsweise betrachtet entlang einer vertikalen Richtung oberhalb der Transporteinheit angeordnet. Die Behälterzuführeinheit umfasst vorzugsweise zumindest ein Magazin, in dem Behälterstangen aus, insbesondere innseitig unlaminierten, Behältern anordenbar sind, insbesondere automatisch oder manuell anordenbar sind. Die Behälterzuführeinheit bildet vorzugsweise eine Arbeitsstation der Abfüllanlage. Vorzugsweise ist die Behälterzuführeinheit in oder an der Gehäuse- und/oder Rahmeneinheit der Abfüllanlage angeordnet, insbesondere in einer Linie mit weiteren Arbeitsstationen der Abfüllanlage. Bevorzugt wird die Folie entlang einer zumindest im Wesentlichen parallel zur Transportrichtung verlaufenden Richtung zwischen den Laminierwerkzeugen zugeführt. Es ist auch denkbar, dass die Folie entlang einer quer, insbesondere zumindest im Wesentlichen senkrecht zur Transportrichtung, vorzugsweise in einer Horiziontalebene, verlaufenden Richtung zwischen die Laminierwerkzeuge eingebracht wird. Mittels der erfindungsgemäßen Ausgestaltung kann vorteilhaft bei einer Herstellung von Behältern auf einen Herstellungsschritt, insbesondere einen Beschichtungs- und/oder Laminierschritt, verzichtet werden. Es kann besonders vorteilhaft einer bei einem Transport oder bei einer Lagerung von hergestellten Behältern möglichen Kontamination entgegengewirkt werden, insbesondere da ein Laminieren und/oder eine Entkeimung erst vor einem Abfüllen eines Produkts innerhalb der Abfüllanlage durchgeführt werden können/kann. Es kann vorteilhaft im Bereich von Falzen, Nähten, Hinterschneidungen o. dgl. durch ein Laminieren, insbesondere mit einer zuvor entkeimten Folie, eine hohe Abtötungsrate von Keimen ermöglicht werden und es können unerwünschte Kontaminationen in den Bereichen von Falzen, Nähten, Hinterschneidungen o. dgl. weitestgehend vermieden werden, wobei eine weitestgehend direkte Weiterverarbeitung der Behälter nach einem Laminieren ermöglicht werden kann. Es kann vorteilhaft eine Beschädigung einer Laminierung/einer Schutzschicht an einer Innenseite der Behälter bei einem Entstapeln oder bei einem Vereinzeln der Behälter, insbesondere während einer Übergabe von einer Behälterzuführeinheit der Abfüllanlage zur Transporteinheit, vermieden werden, insbesondere da die Laminierung/die Schutzschicht an der Innenseite der Behälter erst nach einer Übergabe angeordnet/aufgebracht wird.

Die Abfüllanlage kann weitere, einem Fachmann als sinnvoll erscheinende Vorrichtungen und/oder Einheiten umfassen, die zu einer Handhabung von Produkten, insbesondere von Lebensmitteln, nutzbar sind. Die Abfüllanlage ist vorzugsweise zu einer Abfüllung, Verpackung und/oder Umverpackung von Lebensmitteln vorgesehen. Die Abfüllanlage kann zusätzlich zur Laminiereinheit, zur Abfülleinheit und zur Transporteinheit eine Vielzahl an weiteren Vorrichtungen und/oder Einheiten aufweisen, die ein Fachmann für sinnvoll erachtet, wie beispielsweise eine Verschlusszuführeinheit, eine Siegeleinheit, eine Behälterentladeeinheit, eine Verpackungseinheit o. dgl. Bevorzugt sind alle Vorrichtungen und/oder Einheiten in separaten, vorzugsweise durch Schotten zwischen den Vorrichtungen und/oder Einheiten getrennten, Sterilkammern oder in einer zusammenhängenden Sterilkammer angeordnet.

Die Entkeimungseinheit bildet bevorzugt zusammen mit der Laminiereinheit ein Modul, insbesondere eine Arbeitsstation, der Abfüllanlage. Vorzugsweise ist die Entkeimungseinheit zusammen mit der Laminiereinheit an oder in einem Gehäuseteil oder Rahmenteil der Gehäuse- und/oder Rahmeneinheit der Abfüllanlage angeordnet. Es ist jedoch auch denkbar, dass die Entkeimungseinheit an einem eigenen Gehäuseteil oder Rahmenteil der Gehäuse- und/oder Rahmeneinheit der Abfüllanlage angeordnet ist und in einem Nahbereich der Laminiereinheit angeordnet ist, insbesondere in einem Nahbereich eines Folienzuführelements der Laminiereinheit. Die Entkeimungseinheit ist bevorzugt dazu vorgesehen, die Folie, die mittels der Laminiereinheit verarbeitbar ist, mittels eines Entkeimungsbads oder mittels eines Entkeimungstunnels, wie beispielsweise mittels eines Peroxidbads oder eines Peroxidtunnels o. dgl., zu entkeimen. Die Entkeimungseinheit umfasst vorzugsweise zumindest ein Entkeimungselement zu einem Auftragen eines Entkeimungsfluids auf die Folie oder zu einem Aufnehmen des Entkeimungsfluids, durch das die Folie hindurchführbar ist. Das Entkeimungselement kann als Auftragselement, wie beispielsweise als Sprühdüse, als Auftragswalze, als Auftragspinsel o. dgl., oder als Aufnahmeelement, wie beispielsweise als Wanne o.dgl., zur Bildung eines Entkeimungsbads, durch das die Folie hindurchführbar ist, ausgebildet sein. Andere, einem Fachmann als sinnvoll erscheinende Ausgestaltungen sind ebenfalls denkbar. Die Entkeimungseinheit kann eine oder mehrere Entkeimungsauftragsdüse/n, ein oder mehrere Entkeimungsflüssigkeitsaufnahmewanne/n, ein oder mehrere Entkeimungsauftragsrolle/n oder andere, einem Fachmann als sinnvoll erscheinende Elemente zu einem Auftragen oder Einwirken eines Entkeimungsfluids auf die Folie aufweisen, die insbesondere das oder die Entkeimungselement/e der Entkeimungseinheit bilden. Die Entkeimungseinheit, insbesondere das oder die Entkeimungselement/e, ist/sind vorzugsweise in einem Nahbereich eines Folienzuführelements der Laminiereinheit und/oder in einem Nahbereich eines Laminierwerkzeugs der Laminiereinheit angeordnet. Bevorzugt umfasst die Laminiereinheit zumindest ein Stanzelement zu einem Ausstanzen oder Perforieren der Folie. Vorzugsweise ist das Stanzelement in das Laminierwerkzeug integriert. Es ist jedoch auch denkbar, dass das Stanzelement als separates Element zum Laminierwerkzeug ausgebildet ist. Ein Verformen, ein Aufbringen und/oder ein Ausstanzen der Folie mittels der Laminiereinheit erfolgt vorzugsweise auf eine, einem Fachmann bereits bekannte Art und Weise, insbesondere aus der Thermoformtechnik bereits bekannte Art und Weise. Alternativ oder zusätzlich umfasst die Abfüllanlage zumindest eine Sterilisationseinheit zu einer Sterilisation der, insbesondere mittels der Laminiereinheit laminierten, Behälter. Es ist denkbar, dass die Sterilisationseinheit entlang der Transportrichtung nach der Laminiereinheit , insbesondere vor der Abfülleinheit, angeordnet ist. Vorzugsweise kann die Sterilisationseinheit direkt benachbart zur Laminiereinheit, insbesondere durch ein Schott abgetrennt, angeordnet sein. Bevorzugt kann die Sterilisationseinheit, betrachtet entlang der Transportrichtung, insbesondere direkt, vor der Abfülleinheit angeordnet sein. Vorzugsweise kann die Sterilisationseinheit, betrachtet entlang der Transportrichtung, zwischen der Laminiereinheit und der Abfülleinheit angeordnet sein. Die Sterilisationseinheit kann vorzugsweise eine, einem Fachmann bereits bekannte Ausgestaltung aufweisen. Vorzugsweise kann die Sterilisationseinheit als Wasserstoffperoxid-Sterilisationseinheit, als Plasma-Sterilisationseinheit, als UV-Sterilisationseinheit o. dgl. ausgebildet sein. Insbesondere kann mit der Sterilisationseinheit eine Außenseite und/oder ein Siegelrand der Behälter sterilisiert werden, insbesondere um eine hohe Keimabtötungsrate zu realisieren. Mittels der erfindungsgemäßen Ausgestaltung kann vorteilhaft bei einer Herstellung von Behältern auf einen Herstellungsschritt, insbesondere einen Beschichtungs- und/oder Laminierschritt, verzichtet werden. Es kann besonders vorteilhaft einer bei einem Transport oder bei einer Lagerung von hergestellten Behältern möglichen Kontamination entgegengewirkt werden, insbesondere da ein Laminieren und/oder eine Entkeimung erst vor einem Abfüllen eines Produkts innerhalb der Abfüllanlage durchgeführt werden können/kann. Es kann vorteilhaft im Bereich von Falzen, Nähten, Hinterschneidungen o. dgl. durch ein Laminieren, insbesondere mit einer zuvor entkeimten Folie, eine hohe Abtötungsrate von Keimen ermöglicht werden und es können unerwünschte Kontaminationen in den Bereichen von Falzen, Nähten, Hinterschneidungen o. dgl. weitestgehend vermieden werden, wobei eine weitestgehend direkte Weiterverarbeitung der Behälter nach einem Laminieren ermöglicht werden kann. Es kann vorteilhaft eine Beschädigung einer Laminierung/einer Schutzschicht an einer Innenseite der Behälter bei einem Entstapeln oder bei einem Vereinzeln der Behälter, insbesondere während einer Übergabe von einer Behälterzuführeinheit der Abfüllanlage zur Transporteinheit, vermieden werden, insbesondere da die Laminierung/die Schutzschicht an der Innenseite der Behälter erst nach einer Übergabe angeordnet/aufgebracht wird. Es werden bereits im Behälter befindliche Hinterschneidungen vorzugsweise direkt mit der zuvor entkeimten Folie überdeckt. Es kann vorteilhaft eine hohe Log-Rate/Abtötungsrate erreicht werden.

Zudem wird vorgeschlagen, dass die Abfüllanlage zumindest eine Kammer, insbesondere eine Unterdruck- und/oder Sterilkammer, umfasst, in der zumindest ein Laminierwerkzeug, insbesondere ein Vorstrecker und/oder ein Thermoformwerkzeug, der Laminiereinheit von einer Umgebung abgeschottet angeordnet ist. Die Kammer kann als separate Kammer innerhalb der Gehäuse- und/oder Rahmeneinheit der Abfüllanlage ausgebildet sein oder zumindest teilweise durch die Gehäuse- und/oder Rahmeneinheit der Abfüllanlage gebildet sein. Die Laminiereinheit ist vorzugsweise zumindest größtenteils, insbesondere vollständig, in der Kammer angeordnet. Unter "größtenteils" soll insbesondere mehr als 50 %, bevorzugt mehr als 60 % und ganz besonders bevorzugt mehr als 80 % eines Gesamtvolumens und/oder einer Gesamtmasse eines Objekts verstanden werden.

Vorzugsweise ist die Kammer mittels einer Schleuse, mittels eines Schotts, mittels einer Vorkammer oder sonstigen, einem Fachmann als sinnvoll erscheinenden Vorkehrungen zugänglich und dennoch gegenüber der Umgebung abgeschottet. Insbesondere ist die Kammer oberhalb des Packmittelträgers angeordnet. Es ist jedoch alternativ oder zusätzlich denkbar, dass die Kammer zumindest teilweise unterhalb des Packmittelträgers angeordnet ist. Die Kammer kann den Packmittelträger, insbesondere das Packmitteltransportband, zumindest teilweise umschließen, wobei beispielsweise zumindest ein Dichtelement vorgesehen sein kann, wie beispielsweise eine Dichtlippe, ein Fluidvorhang, eine Bürste o. dgl., das in Kontakt mit dem Packmittelträger angeordnet sein kann. Bevorzugt umfasst die Abfüllanlage zumindest eine Absaugungseinheit, insbesondere zu einem Erzeugen eines Unterdrucks. Die Absaugungseinheit weist vorzugsweise eine, einem Fachmann bereits bekannte Ausgestaltung auf. Bevorzugt umfasst die Abfüllanlage zumindest zwei, insbesondere durch zumindest ein, insbesondere öffenbares oder durchfahrbares, Schott der Abfüllanlage, getrennte Kammern, insbesondere Unterdruck- und/oder Sterilkammern, wobei die Laminiereinheit in einer der Kammern, insbesondere in der bereits zuvor genannten Kammer, angeordnet ist und die Abfülleinheit, insbesondere zumindest Abfülldüsen der Abfülleinheit, in der anderen der Kammern angeordnet ist. Bevorzugt sind die zwei Kammern relativ zu der die Laminiereinheit umgebenden Umgebung jeweils mittels zumindest eines weiteren Schotts abgeschottet. Das/die Schott/en können jegliche, einem Fachmann als sinnvoll erscheinende Ausgestaltungen aufweisen, wie beispielsweise eine Ausgestaltung als Fluidschott, insbesondere als Luftvorhang o. dgl., als Schleuse oder als anderes, einem Fachmann als sinnvoll erscheinendes Schott. Es ist denkbar, dass alternativ oder zusätzlich zum Schott/zu den Schotten eine Vorkammer vorgesehen ist, die mit der Absaugeinheit in Wirkverbindung steht, um die Kammern gegenüber der die Laminiereinheit umgebenden Umgebung abzuschotten. Denkbar ist, dass an zwei sich abgewandten Seiten der Kammer, insbesondere an einer Eingangsseite und an einer Ausgangsseite, jeweils ein Schott der Abfüllanlage angeordnet ist. Die Kammern können jeweils als separate Kammern innerhalb der Gehäuse- und/oder Rahmeneinheit der Abfüllanlage ausgebildet sein oder zumindest teilweise durch die Gehäuse- und/oder Rahmeneinheit der Abfüllanlage gebildet sein. Die Kammern sind bevorzugt, insbesondere direkt über das Schott, aneinander angrenzend angeordnet. Vorzugsweise ist zumindest an einer der Laminiereinheit vorausgehenden Arbeitsstation der Abfüllanlage, insbesondere der Behälterzuführeinheit der Abfüllanlage, zugewandten Seite der Kammer ein weiteres Schott der Abfüllanlage angeordnet. Bevorzugt ist zumindest an einer der Laminiereinheit nachgelagerten Arbeitsstation der Abfüllanlage, insbesondere der Abfülleinheit oder der Sterilisationseinheit, zugewandten Seite der anderen Kammer ein weiteres Schott der Abfüllanlage angeordnet. Es ist denkbar, dass die Abfüllanlage zumindest eine Reinigungseinheit, insbesondere eine Clean-In-Place-Reinigungseinheit (CIP-Reinigungseinheit), zu einer, insbesondere automatischen, Reinigung der Laminiereinheit und/oder zu einer Reinigung der Abfülleinheit umfasst. Die Reinigungseinheit ist vorzugsweise innerhalb der Gehäuse- und/oder Rahmeneinheit angeordnet, in der auch die Laminiereinheit und/oder die Abfülleinheit angeordnet ist. Die Reinigungseinheit, insbesondere die Clean-In-Place-Reinigungseinheit (CIP-Reinigungseinheit), weist vorzugsweise eine, einem Fachmann bereits bekannte Ausgestaltung auf. Mittels der erfindungsgemäßen Ausgestaltung kann vorteilhaft die Laminiereinheit, insbesondere das Laminierwerkzeug, vor einer unerwünschten Verschmutzung zuverlässig geschützt werden. Es kann vorteilhaft ein Laminieren, insbesondere Auftragen der Folie, in einem zumindest weitestgehend keimfreien Bereich ermöglicht werden. Es kann einer Kontaminierung der zu laminierenden Behälter vor einem Laminieren oder während eines Laminierens vorteilhaft entgegengewirkt werden. Es kann vorteilhaft bei einer Herstellung von Behältern auf einen Herstellungsschritt, insbesondere einen Beschichtungs- und/oder Laminierschritt, verzichtet werden. Es kann besonders vorteilhaft einer bei einem Transport oder bei einer Lagerung von hergestellten Behältern möglichen Kontamination entgegengewirkt werden, insbesondere da ein Laminieren und/oder eine Entkeimung erst vor einem Abfüllen eines Produkts innerhalb der Abfüllanlage durchgeführt werden können/kann. Es kann vorteilhaft im Bereich von Falzen, Nähten, Hinterschneidungen o. dgl. durch ein Laminieren, insbesondere mit einer zuvor entkeimten Folie, eine hohe Abtötungsrate von Keimen ermöglicht werden und es können unerwünschte Kontaminationen in den Bereichen von Falzen, Nähten, Hinterschneidungen o. dgl. weitestgehend vermieden werden, wobei eine weitestgehend direkte Weiterverarbeitung der Behälter nach einem Laminieren ermöglicht werden kann. Es kann vorteilhaft ein weitestgehend keimfreies Laminieren ermöglicht werden.

Des Weiteren wird vorgeschlagen, dass die Abfüllanlage zumindest eine, insbesondere die bereits zuvor genannte, Gehäuse- und/oder Rahmeneinheit umfasst, an und/oder in der die Laminiereinheit angeordnet ist, insbesondere zusammen mit der Abfülleinheit. Die Gehäuse- und/oder Rahmeneinheit ist vorzugsweise dazu vorgesehen, Betriebs- und/oder Gewichtskräfte der Arbeitsstationen der Abfüllanlage an einem Untergrund, wie beispielsweise einem Produktionshallenboden o. dgl., abzustützen. Vorzugsweise umgibt die Gehäuse- und/oder Rahmeneinheit die Arbeitsstationen zumindest teilweise und/oder die Arbeitsstationen sind an der Gehäuse- und/oder Rahmeneinheit befestigt. Die Transportrichtung der Transporteinheit verläuft vorzugsweise zumindest im Wesentlichen parallel zu einer Bodenstandfläche der Gehäuse- und/oder Rahmeneinheit. Bevorzugt verläuft die Transportrichtung der Transporteinheit horizontal. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Bevorzugt sind die Kammern, insbesondere die Unterdruck- und/oder Sterilkammern, der Abfüllanlage Teil der Gehäuse- und/oder Rahmeneinheit. Mittels der erfindungsgemäßen Ausgestaltung kann vorteilhaft eine konstruktiv einfache Integration der Laminiereinheit in die Abfüllanlage realisiert werden. Es kann besonders vorteilhaft einer bei einem Transport oder bei einer Lagerung von hergestellten Behältern möglichen Kontamination entgegengewirkt werden, insbesondere da ein Laminieren und/oder eine Entkeimung erst vor einem Abfüllen eines Produkts innerhalb der Abfüllanlage durchgeführt werden können/kann. Es kann vorteilhaft im Bereich von Falzen, Nähten, Hinterschneidungen o. dgl. durch ein Laminieren, insbesondere mit einer zuvor entkeimten Folie, eine hohe Abtötungsrate von Keimen ermöglicht werden und es können unerwünschte Kontaminationen in den Bereichen von Falzen, Nähten, Hinterschneidungen o. dgl. weitestgehend vermieden werden, wobei eine weitestgehend direkte Weiterverarbeitung der Behälter nach einem Laminieren ermöglicht werden kann.

Des Weiteren geht die Erfindung aus von einem Verfahren zu einem Abfüllen von flüssigen, pastösen oder festen Produkten, insbesondere Lebensmitteln, in Behälter, insbesondere Becher, mittels einer Abfüllanlage, insbesondere mittels einer erfindungsgemäßen Abfüllanlage, wobei in zumindest einem Verfahrensschritt die Behälter mittels einer, insbesondere der bereits zuvor genannten, Laminiereinheit der Abfüllanlage, insbesondere innenseitig, laminiert werden, insbesondere bevor die Behälter mittels einer, insbesondere der bereits zuvor genannten, Transporteinheit, insbesondere einer Packmittelträgereinheit, der Abfüllanlage zu einer, insbesondere der bereits zuvor genannten, Abfülleinheit der Abfüllanlage transportiert werden. Es wird vorgeschlagen, dass in zumindest einem Verfahrensschritt eine mittels der Laminiereinheit zu verarbeitende Folie vor einem Aufbringen auf die Behälter mittels einer der Laminiereinheit zugeordneten und entlang einer Folientransportrichtung der Folie in einem Bereich zwischen einer Folienrolle und einem Laminierwerkzeug der Laminiereinheit angeordneten Entkeimungseinheit der Abfüllanlage entkeimt wird. Mittels der erfindungsgemäßen Ausgestaltung kann vorteilhaft eine kurze Gesamtprozesszeit zu einem, insbesondere innenseitigen, Laminieren von Behältern und insbesondere einem daran anschließenden Befüllen sowie Versiegeln der Behälter ermöglicht werden. Es kann vorteilhaft bei einer Herstellung von Behältern auf einen Herstellungsschritt, insbesondere einen Beschichtungs- und/oder Laminierschritt, verzichtet werden. Es kann besonders vorteilhaft einer bei einem Transport oder bei einer Lagerung von hergestellten Behältern möglichen Kontamination entgegengewirkt werden, insbesondere da ein Laminieren und/oder eine Entkeimung erst vor einem Abfüllen eines Produkts innerhalb der Abfüllanlage durchgeführt werden können/kann. Es kann vorteilhaft im Bereich von Falzen, Nähten, Hinterschneidungen o. dgl. durch ein Laminieren, insbesondere mit einer zuvor entkeimten Folie, eine hohe Abtötungsrate von Keimen ermöglicht werden und es können unerwünschte Kontaminationen in den Bereichen von Falzen, Nähten, Hinterschneidungen o. dgl. weitestgehend vermieden werden, wobei eine weitestgehend direkte Weiterverarbeitung der Behälter nach einem Laminieren ermöglicht werden kann. Es kann vorteilhaft eine Beschädigung einer Laminierung/einer Schutzschicht an einer Innenseite der Behälter bei einem Entstapeln oder bei einem Vereinzeln der Behälter, insbesondere während einer Übergabe von einer Behälterzuführeinheit der Abfüllanlage zur Transporteinheit, vermieden werden, insbesondere da die Laminierung/die Schutzschicht an der Innenseite der Behälter erst nach einer Übergabe angeordnet/aufgebracht wird.

Ferner wird vorgeschlagen, dass in zumindest einem Verfahrensschritt unlaminierte Behälter mittels einer, insbesondere der bereits zuvor genannten, Behälterzuführeinheit der Abfüllanlage der Transporteinheit zugeführt werden, wobei, insbesondere in zumindest einem darauffolgenden Verfahrensschritt, die unlaminierten Behälter mittels der Transporteinheit der Laminiereinheit zu einem Laminieren der Behälter zugeführt werden. Mittels der erfindungsgemäßen Ausgestaltung kann vorteilhaft bei einer Herstellung von Behältern auf einen Herstellungsschritt, insbesondere einen Beschichtungs- und/oder Laminierschritt, verzichtet werden. Es kann besonders vorteilhaft einer bei einem Transport oder bei einer Lagerung von hergestellten Behältern möglichen Kontamination entgegengewirkt werden, insbesondere da ein Laminieren und/oder eine Entkeimung erst vor einem Abfüllen eines Produkts innerhalb der Abfüllanlage durchgeführt werden können/kann. Es kann vorteilhaft im Bereich von Falzen, Nähten, Hinterschneidungen o. dgl. durch ein Laminieren, insbesondere mit einer zuvor entkeimten Folie, eine hohe Abtötungsrate von Keimen ermöglicht werden und es können unerwünschte Kontaminationen in den Bereichen von Falzen, Nähten, Hinterschneidungen o. dgl. weitestgehend vermieden werden, wobei eine weitestgehend direkte Weiterverarbeitung der Behälter nach einem Laminieren ermöglicht werden kann. Es kann vorteilhaft eine Beschädigung einer Laminierung/einer Schutzschicht an einer Innenseite der Behälter bei einem Entstapeln oder bei einem Vereinzeln der Behälter, insbesondere während einer Übergabe von einer Behälterzuführeinheit der Abfüllanlage zur Transporteinheit, vermieden werden, insbesondere da die Laminierung/die Schutzschicht an der Innenseite der Behälter erst nach einer Übergabe angeordnet/aufgebracht wird.

Zudem wird vorgeschlagen, dass in zumindest einem Verfahrensschritt eine mittels der Laminiereinheit zu verarbeitende Folie, insbesondere vor einem Aufbringen auf die Behälter, mittels einer der Laminiereinheit zugeordneten, insbesondere mittels der bereits zuvor genannten, Entkeimungseinheit der Abfüllanlage entkeimt wird. Zusätzlich ist denkbar, dass in zumindest einem Verfahrensschritt die mittels der Laminiereinheit laminierten Behälter mittels der Transporteinheit einer, insbesondere der bereits zuvor genannten, Sterilisationseinheit zu einer Sterilisation zugeführt werden, insbesondere bevor die laminierten Behälter mittels der Transporteinheit der Abfülleinheit zugeführt werden. Mittels der erfindungsgemäßen Ausgestaltung kann vorteilhaft bei einer Herstellung von Behältern auf einen Herstellungsschritt, insbesondere einen Beschichtungs- und/oder Laminierschritt, verzichtet werden. Es kann besonders vorteilhaft einer bei einem Transport oder bei einer Lagerung von hergestellten Behältern möglichen Kontamination entgegengewirkt werden, insbesondere da ein Laminieren und/oder eine Entkeimung erst vor einem Abfüllen eines Produkts innerhalb der Abfüllanlage durchgeführt werden können/kann. Es kann vorteilhaft im Bereich von Falzen, Nähten, Hinterschneidungen o. dgl. durch ein Laminieren, insbesondere mit einer zuvor entkeimten Folie, eine hohe Abtötungsrate von Keimen ermöglicht werden und es können unerwünschte Kontaminationen in den Bereichen von Falzen, Nähten, Hinterschneidungen o. dgl. weitestgehend vermieden werden, wobei eine weitestgehend direkte Weiterverarbeitung der Behälter nach einem Laminieren ermöglicht werden kann. Es kann vorteilhaft eine Beschädigung einer Laminierung/einer Schutzschicht an einer Innenseite der Behälter bei einem Entstapeln oder bei einem Vereinzeln der Behälter, insbesondere während einer Übergabe von einer Behälterzuführeinheit der Abfüllanlage zur Transporteinheit, vermieden werden, insbesondere da die Laminierung/die Schutzschicht an der Innenseite der Behälter erst nach einer Übergabe angeordnet/aufgebracht wird. Es werden bereits im Behälter befindliche Hinterschneidungen vorzugsweise direkt mit der zuvor entkeimten Folie überdeckt. Es kann vorteilhaft eine hohe Log-Rate/Abtötungsrate erreicht werden.

Des Weiteren wird vorgeschlagen, dass in zumindest einem Verfahrensschritt die mittels der Laminiereinheit laminierten Behälter mittels der Transporteinheit, insbesondere direkt, der Abfülleinheit zugeführt werden und mit einem Produkt befüllt werden. Mittels der erfindungsgemäßen Ausgestaltung kann besonders vorteilhaft einer bei einem Transport oder bei einer Lagerung von hergestellten Behältern möglichen Kontamination entgegengewirkt werden, insbesondere da ein Laminieren und/oder eine Entkeimung erst vor einem Abfüllen eines Produkts innerhalb der Abfüllanlage durchgeführt werden können/kann. Es kann vorteilhaft im Bereich von Falzen, Nähten, Hinterschneidungen o. dgl. durch ein Laminieren, insbesondere mit einer zuvor entkeimten Folie, eine hohe Abtötungsrate von Keimen ermöglicht werden und es können unerwünschte Kontaminationen in den Bereichen von Falzen, Nähten, Hinterschneidungen o. dgl. weitestgehend vermieden werden, wobei eine weitestgehend direkte Weiterverarbeitung der Behälter nach einem Laminieren ermöglicht werden kann. Es kann vorteilhaft eine Beschädigung einer Laminierung/einer Schutzschicht an einer Innenseite der Behälter bei einem Entstapeln oder bei einem Vereinzeln der Behälter, insbesondere während einer Übergabe von einer Behälterzuführeinheit der Abfüllanlage zur Transporteinheit, vermieden werden, insbesondere da die Laminierung/die Schutzschicht an der Innenseite der Behälter erst nach einer Übergabe angeordnet/aufgebracht wird. Es werden bereits im Behälter befindliche Hinterschneidungen vorzugsweise direkt mit der zuvor entkeimten Folie überdeckt. Es kann vorteilhaft eine hohe Log-Rate/Abtötungsrate erreicht werden.

Ferner wird vorgeschlagen, dass die Behälter mittels der, insbesondere durchgehenden, Transporteinheit der Abfüllanlage zumindest durch die Laminiereinheit und durch die Abfülleinheit transportiert werden. Bevorzugt werden die Behälter mittels der, insbesondere durchgehenden, Transporteinheit der Abfüllanlage zumindest durch die Laminiereinheit und durch die Abfülleinheit transportiert. Bevorzugt werden die Behälter ausgehend von der Behälterzuführeinheit mittels der Transporteinheit durch die gesamte Abfüllanlage bis zu einer Behälterentladeeinheit der Abfüllanlage transportiert, insbesondere weitestgehend frei von einer Entnahme der Behälter im Bereich zwischen der Behälterzuführeinheit und der Behälterentladeeinheit. Vorzugsweise werden die Behälter mittels der Transporteinheit, insbesondere des Packmittelträgers, vorzugsweise des Packmitteltransportbands, ausgehend von der Behälterzuführeinheit zur Laminiereinheit, durch die Laminiereinheit hindurch zur Abfülleinheit, durch die Abfülleinheit hindurch zur Verschlusszuführeinheit, durch die Verschlusszuführeinheit hindurch zur Siegeleinheit und durch die Siegeleinheit hindurch zur Behälterentladeeinheit transportiert, insbesondere mittels eines einzelnen Packmittelträgers, vorzugsweise des Packmitteltransportbands. Denkbar ist jedoch auch, dass der Packmittelträger, insbesondere das Packmitteltransportband, in Teilbereiche unterteilt ist, insbesondere mehrere hintereinander angeordnete Packmitteltransportbänder, vorgesehen sind, um die Behälter den einzelnen Arbeitsstationen der Abfüllanlage zuzuführen. Mittels der erfindungsgemäßen Ausgestaltung kann ein Laminierschritt direkt in der Abfüllanlage erfolgen. Es kann vorteilhaft bei einer Herstellung von Behältern auf einen Herstellungsschritt, insbesondere einen Beschichtungs- und/oder Laminierschritt, verzichtet werden. Es kann besonders vorteilhaft einer bei einem Transport oder bei einer Lagerung von hergestellten Behältern möglichen Kontamination entgegengewirkt werden, insbesondere da ein Laminieren und/oder eine Entkeimung erst vor einem Abfüllen eines Produkts innerhalb der Abfüllanlage durchgeführt werden können/kann. Es kann vorteilhaft im Bereich von Falzen, Nähten, Hinterschneidungen o. dgl. durch ein Laminieren, insbesondere mit einer zuvor entkeimten Folie, eine hohe Abtötungsrate von Keimen ermöglicht werden und es können unerwünschte Kontaminationen in den Bereichen von Falzen, Nähten, Hinterschneidungen o. dgl. weitestgehend vermieden werden, wobei eine weitestgehend direkte Weiterverarbeitung der Behälter nach einem Laminieren ermöglicht werden kann. Es kann vorteilhaft eine Beschädigung einer Laminierung/einer Schutzschicht an einer Innenseite der Behälter bei einem Entstapeln oder bei einem Vereinzeln der Behälter, insbesondere während einer Übergabe von einer Behälterzuführeinheit der Abfüllanlage zur Transporteinheit, vermieden werden, insbesondere da die Laminierung/die Schutzschicht an der Innenseite der Behälter erst nach einer Übergabe angeordnet/aufgebracht wird. Es werden bereits im Behälter befindliche Hinterschneidungen vorzugsweise direkt mit der zuvor entkeimten Folie überdeckt. Es kann vorteilhaft eine hohe Log-Rate/Abtötungsrate erreicht werden.

Die erfindungsgemäße Abfüllanlage und/oder das erfindungsgemäße Verfahren sollen/soll hierbei nicht auf die oben beschriebene Anwendung und Ausführungsform beschränkt sein. Insbesondere können/kann die erfindungsgemäße Abfüllanlage und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine erfindungsgemäße Abfüllanlage in einer schematischen Darstellung und
- Fig. 2: einen Verfahrensablauf eines erfindungsgemäßen Verfahrens zu einem Abfüllen von flüssigen, pastösen oder festen Produkten, insbesondere Lebensmitteln, in Behälter, insbesondere Becher, mittels der erfindungsgemäßen Abfüllanlage in einer schematischen Darstellung.

### Beschreibung des Ausführungsbeispiels

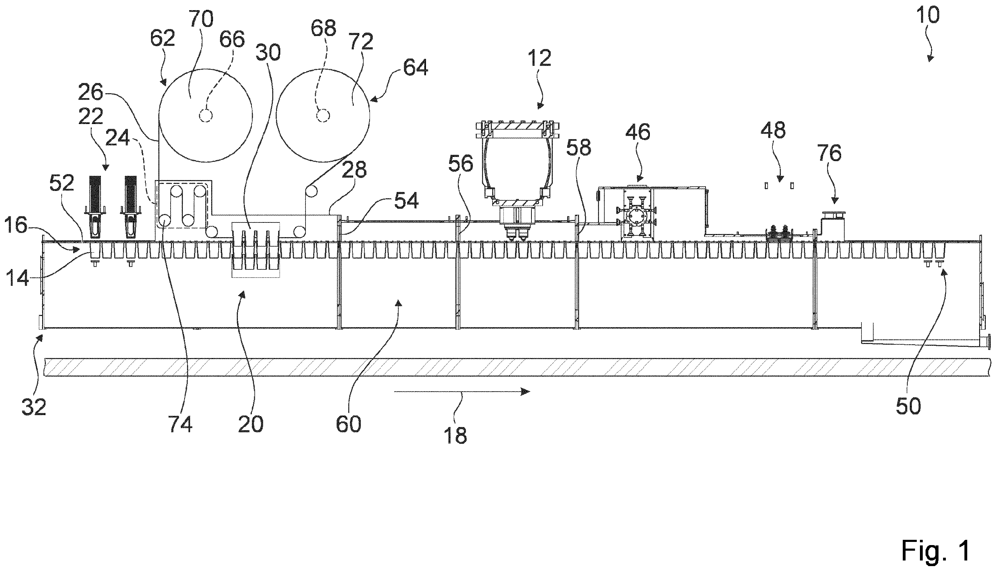

Figur 1 zeigt eine Abfüllanlage 10 für flüssige, pastöse oder feste Produkte, insbesondere Lebensmittel, mit zumindest einer Abfülleinheit 12 zu einem Füllen von Behältern 14, insbesondere Bechern, mit flüssigen, pastösen oder festen Produkten und mit zumindest einer Transporteinheit 16, insbesondere einer Packmittelträgereinheit, zu einem Transport der Behälter 14 entlang einer Transportrichtung 18 der Transporteinheit 16, insbesondere zumindest zu einem Zuführen der Behälter 14 zur Abfülleinheit 12. Die Abfüllanlage 10 ist vorzugsweise zu einer Abfüllung, Verpackung und/oder Umverpackung von Lebensmitteln vorgesehen. Die Abfüllanlage 10 umfasst zumindest eine Laminiereinheit 20 zu einem zumindest einseitigen, insbesondere innenseitigen, Laminieren von Behältern 14, insbesondere Bechern. Die Laminiereinheit 20 ist, betrachtet entlang der Transportrichtung 18, vor der Abfülleinheit 12 angeordnet. Die Laminiereinheit 20 ist bevorzugt dazu vorgesehen, die Behälter 14, insbesondere zumindest innenseitig, mit einer Folie 26 zu versehen, die eine Barriereschicht bildet, insbesondere eine Barriereschicht gegenüber Wasserdampf, Sauerstoff, UV-Licht, Fett, Säure, Aroma o. dgl. auf eine, einem Fachmann bereits bekannte Art und Weise bildet. Die Laminiereinheit 20 kann zu einer Innen- und/oder Außenlaminierung der Behälter 14 mit der Folie 26 vorgesehen sein. Besonders bevorzugt ist die Laminiereinheit 20 als Innenlaminiereinheit ausgebildet, die dazu vorgesehen ist, eine Innenseite der Behälter 14 mit der Folie 26 zu versehen. Es ist jedoch auch alternativ denkbar, dass die Laminiereinheit 20 dazu vorgesehen ist, eine Außenseite oder eine Innen- sowie eine Außenseite der Behälter 14 mit der Folie 26 zu versehen. Die Laminiereinheit 20 ist vorzugsweise als Thermoformeinheit ausgebildet. Es ist jedoch auch denkbar, dass die Laminiereinheit 20 eine andere, einem Fachmann als sinnvoll erscheinende Ausgestaltung aufweist. Bevorzugt ist die Laminiereinheit 20 in oder an einer Gehäuse- und/oder Rahmeneinheit 32 der Abfüllanlage 10 angeordnet, insbesondere in einer Linie mit weiteren Arbeitsstationen der Abfüllanlage 10. Vorzugsweise ist die Laminiereinheit 20 zumindest zusammen mit der Abfülleinheit 12 an und/oder in der Gehäuse- und/oder Rahmeneinheit 32 angeordnet. Die Abfüllanlage 10 umfasst zumindest eine Kammer 28, insbesondere eine Unterdruck- und/oder Sterilkammer, in der zumindest ein Laminierwerkzeug 30, insbesondere ein Vorstrecker und/oder ein Thermoformwerkzeug, der Laminiereinheit 20 von einer Umgebung abgeschottet angeordnet ist.

Die Kammer 28 kann als separate Kammer 28 innerhalb der Gehäuse- und/oder Rahmeneinheit 32 der Abfüllanlage 10 ausgebildet sein oder zumindest teilweise durch die Gehäuse- und/oder Rahmeneinheit 32 der Abfüllanlage 10 gebildet sein. Die Laminiereinheit 20, insbesondere Laminierwerkzeuge 30, ist/sind vorzugsweise zumindest größtenteils, insbesondere vollständig, in der Kammer 28 angeordnet. Vorzugsweise ist die Kammer 28 mittels einer Schleuse, mittels eines Schotts 54, mittels einer Vorkammer oder sonstigen, einem Fachmann als sinnvoll erscheinenden Vorkehrungen zugänglich und dennoch gegenüber der Umgebung abgeschottet. Insbesondere ist die Kammer 28 zumindest oberhalb eines Packmittelträgertransportwegs durch die Laminiereinheit 20, insbesondere oberhalb eines Packmittelträgers 52 der Transporteinheit 16, angeordnet. Es ist jedoch alternativ oder zusätzlich denkbar, dass die Kammer 28 zumindest teilweise unterhalb des Packmittelträgertransportwegs durch die Laminiereinheit 20, insbesondere unterhalb des Packmittelträgers 52, angeordnet ist. Die Kammer 28 kann den Packmittelträger 52, insbesondere das Packmitteltransportband, zumindest teilweise umschließen, insbesondere mittels zumindest eines Dichtelements, wie beispielsweise einer Dichtlippe, eines Fluidvorhangs, wie beispielsweise ein Luftvorhang, ein Gasvorhang, ein Flüssigkeitsvorhang o. dgl., einer Bürste o. dgl., in Kontakt mit dem Packmittelträger 52 angeordnet sein. Bevorzugt umfasst die Abfüllanlage 10 zumindest eine Absaugungseinheit 76, insbesondere zu einem Erzeugen eines Unterdrucks in der Kammer 28. Die Absaugungseinheit 76 weist vorzugsweise eine, einem Fachmann bereits bekannte Ausgestaltung auf.

Die Laminiereinheit 20 umfasst vorzugsweise eine Folienzuführung 62 und zumindest eine Folienabführung 64. Die Folienzuführung 62 und/oder die Folienabführung 64 können zumindest teilweise innerhalb oder außerhalb der Kammer 28 angeordnet sein. Bei einer Anordnung der Folienzuführung 62 und/oder der Folienabführung 64 außerhalb der Kammer 28 umfasst die Abfüllanlage 10 geeignete Dichtelemente, insbesondere um auf eine, einem Fachmann bereits bekannte Art und Weise einen keimfreien Innenraum in der Kammer 28 zu ermöglichen. Bevorzugt weist die Folienzuführung 62 ein Aufnahmeelement 66 zu einer Aufnahme einer Folienrolle 70 der mittels der Laminiereinheit 20 zu verarbeitenden Folie 26 auf. Die Folienabführung 64 umfasst vorzugsweise ein Aufnahmeelement 68 zu einer Aufnahme einer Restfolienrolle 72 eines Rests der Folie 26, der nach einem Laminieren mittels der Laminiereinheit 20 übrigbleibt. Die Laminiereinheit 20 weist ferner eine Vielzahl an Spann- und/oder Antriebsrollen 74 auf, die dazu vorgesehen sind, die Folie 26 unter Spannung zu halten und/oder von der Folienrolle 70 abzuwickeln. Ein Laminieren der Behälter 14 mittels der Laminiereinheit 20 erfolgt bevorzugt auf eine, einem Fachmann bereits aus der Thermoformtechnik bekannte Art und Weise. Es ist jedoch auch denkbar, dass die Laminiereinheit 20 frei von einer Folienabführung 64 ausgebildet ist. Bei einer Ausgestaltung der Laminiereinheit 20 ohne eine Folienabführung 64 ist es denkbar, dass mittels der Folienzuführung 62 dem Laminierwerkzeug 30 beispielsweise eine bereits nutzengerecht zugeschnittene oder entsprechend ausgestanzte Folie 26 zugeführt wird, wodurch eine Abfallmenge vorteilhaft reduziert oder weitestgehend vermieden werden kann.

Die Abfüllanlage 10 umfasst zumindest eine Entkeimungseinheit 24 (in Figur 1 gestrichelt dargestellt), die der Laminiereinheit 20 zugeordnet ist und dazu vorgesehen ist, die mittels der Laminiereinheit 20 verarbeitbare Folie 26 zu entkeimen, insbesondere vor einem Aufbringen der Folie 26 auf eine Innenseite der Behälter 14. Die Entkeimungseinheit 24 bildet bevorzugt zusammen mit der Laminiereinheit 20 ein Modul, insbesondere eine Arbeitsstation, der Abfüllanlage 10. Vorzugsweise ist die Entkeimungseinheit 24 zusammen mit der Laminiereinheit 20 an oder in einem Gehäuseteil oder Rahmenteil der Gehäuse- und/oder Rahmeneinheit 32 der Abfüllanlage 10 angeordnet, insbesondere in der Kammer 28, in der das Laminierwerkzeug 30 angeordnet ist. Bevorzugt ist die Entkeimungseinheit 24, insbesondere zumindest ein Entkeimungselement der Entkeimungseinheit 24, in einem Nahbereich der Folienzuführung 62 angeordnet. Die Entkeimungseinheit 24, insbesondere zumindest das Entkeimungselement der Entkeimungseinheit 24, ist entlang einer Folientransportrichtung der Folie 26 in einem Bereich zwischen der Folienrolle 70 und dem Laminierwerkzeug 30 angeordnet. Die Entkeimungseinheit 24 ist bevorzugt dazu vorgesehen, die Folie 26, die mittels der Laminiereinheit 20 verarbeitbar ist, mittels eines Entkeimungsbads oder mittels eines Entkeimungstunnels, wie beispielsweise mittels eines Peroxidbads oder eines Peroxidtunnels o. dgl., zu entkeimen. Die Entkeimungseinheit 24 umfasst vorzugsweise zumindest das Entkeimungselement zu einem Auftragen eines Entkeimungsfluids auf die Folie 26 oder zu einem Aufnehmen des Entkeimungsfluids, durch das die Folie 26 hindurchführbar ist. Das Entkeimungselement kann als Auftragselement, wie beispielsweise als Sprühdüse, als Auftragswalze, als Auftragspinsel o. dgl., oder als Aufnahmeelement, wie beispielsweise als Wanne o.dgl., zur Bildung eines Entkeimungsbads, durch das die Folie 26 hindurchführbar ist, ausgebildet sein. Andere, einem Fachmann als sinnvoll erscheinende Ausgestaltungen sind ebenfalls denkbar.

Die Abfüllanlage 10 umfasst, insbesondere zusätzlich zur Laminiereinheit 20 und zur Abfülleinheit 12, bevorzugt eine Behälterzuführeinheit 22 zu einer Bestückung der Transporteinheit 16 mit den, insbesondere unlaminierten, Behältern 14. Die Behälterzuführeinheit 22 zu einer Zuführung von den, insbesondere unlaminierten, Behältern 14 zur Transporteinheit 16 ist bevorzugt, betrachtet entlang der Transportrichtung 18 der Transporteinheit 16, vor der Laminiereinheit 20 angeordnet. Ferner umfasst die Abfüllanlage 10 vorzugsweise zumindest eine Verschlusszuführeinheit 46 zu einem Zuführen eines Verschlusses, mittels dessen der jeweilige Behälter 14 verschließbar ist. Die Abfüllanlage 10 weist vorzugsweise des Weiteren eine Siegeleinheit 48 zu einem Siegeln des Verschlusses an den Behälter 14 auf eine, einem Fachmann bereits bekannte Art und Weise auf.

Ferner umfasst die Abfüllanlage 10 zumindest eine Behälterentladeeinheit 50 zu einem Entladen der Behälter 14 aus dem Packmittelträger 52 der Transporteinheit 16 der Abfüllanlage 10. Bevorzugt umfasst die Transporteinheit 16 den Packmittelträger 52, insbesondere ein Packmitteltransportband. Es ist jedoch auch denkbar, dass die Transporteinheit 16 alternativ oder zusätzlich zum Packmittelträger 52, insbesondere alternativ oder zusätzlich zum Packmitteltransportband, weitere, einem Fachmann als sinnvoll erscheinende Transport- oder Förderelemente umfasst, wie beispielsweise zumindest einen Kettenförderer, zumindest einen mehrachsigen Roboter, zumindest einen Vakuumgreifer, zumindest ein elektrodynamisches Förderelement o. dgl. Bevorzugt ist die Transporteinheit 16, insbesondere der Packmittelträger 52, zu einem Transport der Behälter 14 durch die gesamte Abfüllanlage 10 vorgesehen. Vorzugsweise ist die Transporteinheit 16, insbesondere der Packmittelträger 52, zu einem Transport der Behälter 14 von Arbeitsstation zu Arbeitsstation der Abfüllanlage 10 vorgesehen, insbesondere weitestgehend entnahmefrei aus dem Packmittelträger 52. Die Abfüllanlage 10 kann weitere, einem Fachmann als sinnvoll erscheinende Vorrichtungen und/oder Einheiten umfassen, die zu einer Handhabung von Produkten, insbesondere von Lebensmitteln, nutzbar sind, wie beispielsweise eine Verpackungseinheit o. dgl. Bevorzugt sind alle Vorrichtungen und/oder Einheiten in separaten, vorzugsweise durch Schotten 54, 56, 58 zwischen den Vorrichtungen und/oder Einheiten getrennten, Sterilkammern oder in einer zusammenhängenden Sterilkammer angeordnet. Das/die Schott/en 54, 56, 58 können jegliche, einem Fachmann als sinnvoll erscheinende Ausgestaltungen aufweisen, wie beispielsweise eine Ausgestaltung als Fluidschott, insbesondere als Luftvorhang o. dgl., als Schleuse oder als anderes, einem Fachmann als sinnvoll erscheinendes Schott.

Es ist denkbar, dass die Abfüllanlage 10 zumindest eine Sterilisationseinheit 60 zu einer Sterilisation der, insbesondere mittels der Laminiereinheit 20 laminierten, Behälter 14 umfasst, wobei die Sterilisationseinheit 60 entlang der Transportrichtung 18 nach der Laminiereinheit 20, insbesondere vor der Abfülleinheit 12, angeordnet sein kann, zu einer Sterilisation der Behälter 14. Es ist jedoch auch denkbar, dass die Sterilisationseinheit 60 zu einer Sterilisation der, insbesondere unlaminierten, Behälter 14 vorgesehen ist, wobei die Sterilisationseinheit 60 entlang der Transportrichtung 18 vor der Laminiereinheit 20, insbesondere zwischen der Behälterzuführeinheit 22 und der Laminiereinheit 20, angeordnet sein kann.

Vorzugsweise kann die Sterilisationseinheit 60 direkt benachbart zur Laminiereinheit 20, insbesondere durch eines der Schotts 54, 56, 58 abgetrennt, angeordnet sein. Bevorzugt kann die Sterilisationseinheit 60, betrachtet entlang der Transportrichtung 18, insbesondere direkt, vor der Abfülleinheit 12 angeordnet sein. Vorzugsweise kann die Sterilisationseinheit 60, betrachtet entlang der Transportrichtung 18, zwischen der Laminiereinheit 20 und der Abfülleinheit 12 angeordnet sein. Die Sterilisationseinheit 60 kann vorzugsweise eine, einem Fachmann bereits bekannte Ausgestaltung aufweisen. Vorzugsweise kann die Sterilisationseinheit 60 als Wasserstoffperoxid-Sterilisationseinheit, als Plasma-Sterilisationseinheit, als UV-Sterilisationseinheit o. dgl. ausgebildet sein. Insbesondere kann mit der Sterilisationseinheit 60 eine Außenseite und/oder ein Siegelrand der Behälter 14 sterilisiert werden, insbesondere um eine hohe Keimabtötungsrate zu realisieren. Die Abfüllanlage 10 umfasst die Sterilisationseinheit 60 vorzugsweise nicht zwingend, sondern lediglich optional.

Die Transporteinheit 16 ist zumindest im Wesentlichen zumindest zu einem Transport der Behälter 14 durch die Laminiereinheit 20 und durch die Abfülleinheit 12 vorgesehen. Vorzugsweise ist die Transporteinheit 16 zu einem Transport der Behälter 14 mittels des Packmittelträgers 52, vorzugsweise des Packmitteltransportbands, ausgehend von der Behälterzuführeinheit 22 zur Laminiereinheit 20, durch die Laminiereinheit 20 hindurch zur Abfülleinheit 12, durch die Abfülleinheit 12 hindurch zur Verschlusszuführeinheit 46, durch die Verschlusszuführeinheit 46 hindurch zur Siegeleinheit 48 und durch die Siegeleinheit 48 hindurch zur Behälterentladeeinheit 50 vorgesehen. Bei einem Vorhandensein der Sterilisationseinheit 60 ist die Transporteinheit 16 vorzugsweise zusätzlich dazu vorgesehen, die laminierten Behälter 14 von der Laminiereinheit 20 zur Sterilisationseinheit 60, durch die Sterilisationseinheit 60 hindurch zur Abfülleinheit 12 zu transportieren.

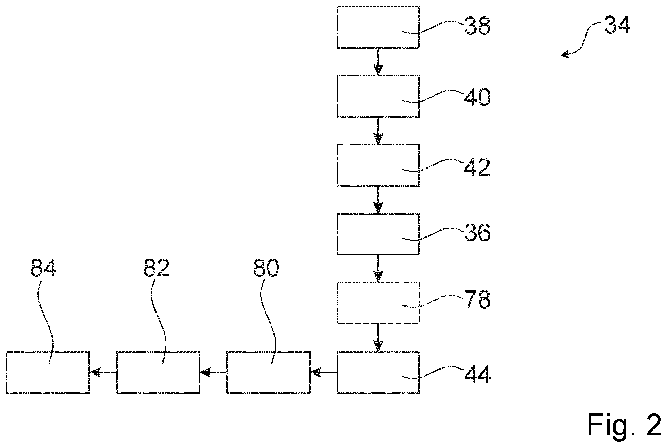

Figur 2 zeigt einen schematischen Verfahrensablauf eines Verfahrens 34 zu einem Abfüllen von flüssigen, pastösen oder festen Produkten, insbesondere Lebensmitteln, in die Behälter 14, insbesondere Becher, mittels der Abfüllanlage 10. Bevorzugt werden in zumindest einem Verfahrensschritt 38 des Verfahrens 34, insbesondere unlaminierte, Behälter 14 mittels der Behälterzuführeinheit 22 der Transporteinheit 16 zugeführt, wobei, insbesondere in zumindest einem darauffolgenden Verfahrensschritt 40 des Verfahrens 34, die, insbesondere unlaminierten, Behälter 14 mittels der Transporteinheit 16 der Laminiereinheit 20 zu einem Laminieren der Behälter 14 zugeführt werden. Vorzugsweise werden die Behälter 14 in dem Verfahrensschritt 38 des Verfahrens 34, insbesondere ausgehend von Becherstangen vereinzelt, dem Packmittelträger 52 mittels der Behälterzuführeinheit 22 zugeführt. Insbesondere wird der Packmittelträger 52 in dem Verfahrensschritt 38 vollautomatisch mit Behältern 14 bestückt.

Vorzugsweise wird in zumindest einem Verfahrensschritt 42 des Verfahrens 34 die mittels der Laminiereinheit 20 zu verarbeitende Folie 26, insbesondere vor einem Aufbringen auf die Behälter 14, mittels der der Laminiereinheit 20 zugeordneten Entkeimungseinheit 24 der Abfüllanlage 10 entkeimt. Bevorzugt werden in zumindest einem Verfahrensschritt 36 die Behälter 14 mittels der Laminiereinheit 20 der Abfüllanlage 10, insbesondere innenseitig, laminiert, insbesondere bevor die Behälter 14 mittels der Transporteinheit 16 zur Abfülleinheit 12 der Abfüllanlage 10 transportiert werden. Vorzugsweise werden die Behälter 14 mittels der Laminiereinheit 20, insbesondere innenseitig, laminiert nachdem die Behälter 14 mittels der Behälterzuführeinheit 22 der Transporteinheit 16 zugeführt wurden und nachdem die Folie 26 mittels der Entkeimungseinheit 24 entkeimt wurde. Bevorzugt werden in zumindest einem Verfahrensschritt 44 des Verfahrens 34 die mittels der Laminiereinheit 20 laminierten Behälter 14 mittels der Transporteinheit 16, insbesondere direkt, der Abfülleinheit 12 zugeführt und mit einem Produkt befüllt. Besonders bevorzugt werden die Behälter 14 vorzugsweise innerhalb der Abfüllanlage 10 mittels der, insbesondere durchgehenden, vorzugsweise einzelnen, Transporteinheit 16 der Abfüllanlage 10 zumindest durch die Laminiereinheit 20 und durch die Abfülleinheit 12 transportiert. In einem insbesondere optionalen Verfahrensschritt 78 des Verfahrens 34 werden die Behälter 14 nach einem Laminieren mittels der Laminiereinheit 20 der Sterilisationseinheit 60 zugeführt und sterilisiert, bevor die Behälter 14 der Abfülleinheit 12 zu einem Befüllen mit Produkten zugeführt werden. Bevorzugt werden die, insbesondere befüllten, Behälter 14 in zumindest einem Verfahrensschritt 80 des Verfahrens 34 der Verschlusszuführeinheit 46 zugeführt, mittels derer den Behältern 14 jeweils ein Verschluss (hier nicht näher dargestellt), vorzugsweise in Form eine Folie oder als Deckel, zugeführt wird. Vorzugsweise werden die, insbesondere mit dem Verschluss versehenen, Behälter 14 in zumindest einem Verfahrensschritt 82 des Verfahrens 34 der Siegeleinheit 48 zugeführt, mittels derer der Verschluss an den Behälter 14 gesiegelt wird, insbesondere auf eine, einem Fachmann bereits bekannte Art und Weise.

Insbesondere werden die, insbesondere versiegelten, Behälter 14 in zumindest einem Verfahrensschritt 84 des Verfahrens 34 der Behälterentladeeinheit 50 zugeführt, wobei die Behälter 14 aus einer sterilen Arbeitsumgebung herausgeführt werden. Anschließend können die Behälter 14 weiteren, einem Fachmann als sinnvoll erscheinenden Arbeitsstationen zugeführt werden, wie beispielsweise einer Verpackungseinheit o. dgl. Besondere bevorzugt werden die Behälter 14, vorzugsweise innerhalb der Abfüllanlage 10 mittels der, insbesondere durchgehenden, vorzugsweise einzelnen, Transporteinheit 16 während des gesamten Verfahrens 34 transportiert. Das Verfahren 34 kann weitere, einem Fachmann als sinnvoll erscheinende Verfahrensschritte aufweisen, insbesondere abgeleitet anhand der Beschreibung der Funktionsweise und/oder der Ausgestaltung der Abfüllanlage 10.

## Patentansprüche

1. Abfüllanlage für flüssige, pastöse oder feste Produkte, insbesondere Lebensmittel, mit zumindest einer Abfülleinheit (12) zu einem Füllen von Behältern (14), insbesondere Bechern, mit flüssigen, pastösen oder festen Produkten, mit zumindest einer Transporteinheit (16), insbesondere Packmittelträgereinheit, zu einem Transport der Behälter (14) entlang einer Transportrichtung (18) der Transporteinheit (16), insbesondere zumindest zu einem Zuführen der Behälter (14) zur Abfülleinheit (12), und mit zumindest einer Laminiereinheit (20) zu einem zumindest einseitigen, insbesondere innenseitigen, Laminieren von Behältern (14), insbesondere Bechern, die, betrachtet entlang der Transportrichtung (18), vor der Abfülleinheit (12) angeordnet ist, **gekennzeichnet durch** zumindest eine Entkeimungseinheit (24), die der Laminiereinheit (20) zugeordnet ist und dazu vorgesehen ist, eine mittels der Laminiereinheit (20) verarbeitbare Folie (26) vor einem Aufbringen der Folie (26) auf eine Innenseite der Behälter (14) zu entkeimen, wobei die Entkeimungseinheit (24), insbesondere zumindest ein Entkeimungselement der Entkeimungseinheit (24), entlang einer Folientransportrichtung der Folie (26) in einem Bereich zwischen einer Folienrolle (70) und einem Laminierwerkzeug (30) der Laminiereinheit (20) angeordnet ist.

2. Abfüllanlage nach Anspruch 1, **gekennzeichnet durch** zumindest eine Behälterzuführeinheit (22) zu einer Zuführung von, insbesondere unlaminierten, Behältern (14) zur Transporteinheit (16), wobei die Behälterzuführeinheit (22), betrachtet entlang der Transportrichtung (18) der Transporteinheit (16), vor der Laminiereinheit (20) angeordnet ist.

3. Abfüllanlage nach Anspruch 1 oder 2, **gekennzeichnet durch** zumindest eine Kammer (28), insbesondere eine Unterdruck- und/oder Sterilkammer, in der zumindest ein Laminierwerkzeug (30), insbesondere ein Vorstrecker und/oder ein Thermoformwerkzeug, der Laminiereinheit (20) von einer Umgebung abgeschottet angeordnet ist.

4. Abfüllanlage nach einem der vorhergehenden Ansprüche, **gekennzeichnet durch** zumindest eine Gehäuse- und/oder Rahmeneinheit (32), an und/oder in der die Laminiereinheit (20) angeordnet ist, insbesondere zusammen mit der Abfülleinheit (12).

5. Verfahren zu einem Abfüllen von flüssigen, pastösen oder festen Produkten, insbesondere Lebensmitteln, in Behälter (14), insbesondere Becher, mittels einer Abfüllanlage, insbesondere mittels einer Abfüllanlage nach einem der Ansprüche 1 bis 4, wobei in zumindest einem Verfahrensschritt (36) die Behälter (14) mittels einer Laminiereinheit (20) der Abfüllanlage, insbesondere innenseitig, laminiert werden, insbesondere bevor die Behälter (14) mittels einer Transporteinheit (16), insbesondere einer Packmittelträgereinheit, der Abfüllanlage zu einer Abfülleinheit (12) der Abfüllanlage transportiert werden, **dadurch gekennzeichnet, dass** in zumindest einem Verfahrensschritt (42) eine mittels der Laminiereinheit (20) zu verarbeitende Folie (26) vor einem Aufbringen auf die Behälter (14) mittels einer der Laminiereinheit (20) zugeordneten und entlang einer Folientransportrichtung der Folie (26) in einem Bereich zwischen einer Folienrolle (70) und einem Laminierwerkzeug (30) der Laminiereinheit (20) angeordneten Entkeimungseinheit (24) der Abfüllanlage entkeimt wird.

6. Verfahren nach Anspruch 5, **dadurch gekennzeichnet, dass** in zumindest einem Verfahrensschritt (38) unlaminierte Behälter (14) mittels einer Behälterzuführeinheit (22) der Abfüllanlage der Transporteinheit (16) zugeführt werden, wobei, insbesondere in zumindest einem darauffolgenden Verfahrensschritt (40), die unlaminierten Behälter (14) mittels der Transporteinheit (16) der Laminiereinheit (20) zu einem Laminieren der Behälter (14) zugeführt werden.

7. Verfahren nach Anspruch 5 oder 6, **dadurch gekennzeichnet, dass** in zumindest einem Verfahrensschritt (44) die mittels der Laminiereinheit (20) laminierten Behälter (14) mittels der Transporteinheit (16), insbesondere direkt, der Abfülleinheit (12) zugeführt werden und mit einem Produkt befüllt werden.

8. Verfahren nach einem der Ansprüche 5 bis 7, **dadurch gekennzeichnet, dass** die Behälter (14) mittels der, insbesondere durchgehenden, Transporteinheit (16) der Abfüllanlage zumindest durch die Laminiereinheit (20) und durch die Abfülleinheit (12) transportiert werden.

## Claims

1. Filling system for liquid, pasty or solid products, in particular food products, having at least one filling unit (12) for filling containers (14), in particular cups, with liquid, pasty or solid products, having at least one transport unit (16), in particular packaging means carrier unit, for transporting the containers (14) along a transport direction (18) of the transport unit (16), in particular at least for feeding the containers (14) to the filling unit (12), and having at least one lamination unit (20) for laminating containers (14), in particular cups, on at least one side, in particular on the inside, which lamination unit (20), as viewed along the transport direction (18), is arranged upstream of the filling unit (12), **characterized by** at least one sterilization unit (24) which is assigned to the lamination unit (20) and is configured to sterilize a film (26) which can be processed by means of the lamination unit (20) before the film (26) is applied to an inner side of the containers (14), wherein the sterilization unit (24), in particular at least one sterilization element of the sterilization unit (24), is arranged along a film transport direction of the film (26) in a region between a film roll (70) and a laminating tool (30) of the lamination unit (20).

2. Filling system according to claim 1, **characterized by** at least one container feeding unit (22) for feeding, in particular unlaminated, containers (14) to the transport unit (16), wherein the container feeding unit (22), as viewed along the transport direction (18) of the transport unit (16), is arranged upstream of the lamination unit (20).

3. Filling system according to claim 1 or 2, **characterized by** at least one chamber (28), in particular a negative pressure and/or sterile chamber, in which at least one laminating tool (30), in particular a pre-stretcher and/or a thermoforming tool, of the lamination unit (20) is arranged so as to be sealed off from an environment.

4. Filling system according to any one of the preceding claims, **characterized by** at least one housing and/or frame unit (32), on and/or in which the lamination unit (20) is arranged, in particular together with the filling unit (12).

5. Method for filling liquid, pasty or solid products, in particular food products, into containers (14), in particular cups, by means of a filling system, in particular by means of a filling system according to any one of claims 1 to 4, wherein, in at least one method step (36), the containers (14) are laminated, in particular on the inside, by means of a lamination unit (20) of the filling system, in particular before the containers (14) are transported to a filling unit (12) of the filling system by means of a transport unit (16), in particular a packaging means carrier unit, of the filling system, **characterized in that,** in at least one method step (42), a film (26) which is to be processed by means of the lamination unit (20) is sterilized before it is applied to the containers (14) by means of a sterilization unit (24) of the filling system which is assigned to the lamination unit (20) and is arranged along a film transport direction of the film (26) in a region between a film roll (70) and a laminating tool (30) of the lamination unit (20).

6. Method according to claim 5, **characterized in that,** in at least one method step (38), unlaminated containers (14) are fed to the transport unit (16) by means of a container feeding unit (22) of the filling system, wherein, in particular in at least one subsequent method step (40), the unlaminated containers (14) are fed to the lamination unit (20) by means of the transport unit (16) in order to laminate the containers (14).

7. Method according to claim 5 or 6, **characterized in that,** in at least one method step (44), the containers (14) which are laminated by means of the lamination unit (20) are fed, in particular directly, to the filling unit (12) by means of the transport unit (16) and are filled with a product.

8. Method according to any one of claims 5 to 7, **characterized in that** the containers (14) are transported at least through the lamination unit (20) and through the filling unit (12) by means of the, in particular continuous, transport unit (16) of the filling system.

## Revendications

1. Installation de remplissage pour des produits liquides, pâteux ou solides, en particulier des produits alimentaires, avec au moins une unité de remplissage (12) pour un remplissage de récipients (14), en particulier de gobelets, avec des produits liquides, pâteux ou solides, avec au moins une unité de transport (16), en particulier une unité de support d'emballage, pour un transport des récipients (14) le long d'une direction de transport (18) de l'unité de transport (16), en particulier au moins pour une amenée des récipients (14) à l'unité de remplissage (12), et avec au moins une unité de stratification (20) pour une stratification au moins d'un côté, en particulier du côté intérieur, de récipients (14), en particulier de gobelets, qui, vue le long de la direction de transport (18), est disposée avant l'unité de remplissage (12), **caractérisée par** au moins une unité de stérilisation (24) qui est associée à l'unité de stratification (20) et qui est prévue pour stériliser un film (26) pouvant être traité au moyen de l'unité de stratification (20) avant une application du film (26) sur un côté intérieur des récipients (14), l'unité de stérilisation (24), en particulier au moins un élément de stérilisation de l'unité de stérilisation (24), étant disposée le long d'une direction de transport de film du film (26) dans une zone entre un rouleau de film (70) et un outil de stratification (30) de l'unité de stratification (20).

2. Installation de remplissage selon la revendication 1, **caractérisée par** au moins une unité d'amenée de récipients (22) pour une amenée de récipients (14), en particulier non stratifiés, à l'unité de transport (16), l'unité d'amenée de récipients (22), vue le long de la direction de transport (18) de l'unité de transport (16), étant disposée avant l'unité de stratification (20).

3. Installation de remplissage selon la revendication 1 ou 2, **caractérisée par** au moins une chambre (28), en particulier une chambre à pression négative et/ou stérile, dans laquelle au moins un outil de stratification (30), en particulier un pré-étireur et/ou un outil de thermoformage, de l'unité de stratification (20) est disposé de manière isolée d'un environnement*.*

4. Installation de remplissage selon l'une quelconque des revendications précédentes, **caractérisée par** au moins une unité de boîtier et/ou de cadre (32), sur et/ou dans laquelle l'unité de stratification (20) est disposée, en particulier conjointement avec l'unité de remplissage (12).

5. Procédé pour un remplissage de produits liquides, pâteux ou solides, en particulier de produits alimentaires, dans des récipients (14), en particulier des gobelets, au moyen d'une installation de remplissage, en particulier au moyen d'une installation de remplissage selon l'une quelconque des revendications 1 à 4, où, dans au moins une étape de procédé (36), les récipients (14) sont stratifiés, en particulier du côté intérieur, au moyen d'une unité de stratification (20) de l'installation de remplissage, en particulier avant que les récipients (14) soient transportés au moyen d'une unité de transport (16), en particulier d'une unité de support d'emballage, de l'installation de remplissage à une unité de remplissage (12) de l'installation de remplissage, **caractérisé en ce que**, dans au moins une étape de procédé (42), un film (26) à traiter au moyen de l'unité de stratification (20) est stérilisé avant une application sur les récipients (14) au moyen d'une unité de stérilisation (24) de l'installation de remplissage associée à l'unité de stratification (20) et disposée le long d'une direction de transport de film du film (26) dans une zone entre un rouleau de film (70) et un outil de stratification (30) de l'unité de stratification (20).

6. Procédé selon la revendication 5, **caractérisé en ce que**, dans au moins une étape de procédé (38), des récipients non stratifiés (14) sont amenés au moyen d'une unité d'amenée de récipients (22) de l'installation de remplissage à l'unité de transport (16), où, en particulier dans au moins une étape de procédé suivante (40), les récipients non stratifiés (14) sont amenés au moyen de l'unité de transport (16) à l'unité de stratification (20) pour une stratification des récipients (14).

7. Procédé selon la revendication 5 ou 6, **caractérisé en ce que**, dans au moins une étape de procédé (44), les récipients (14) stratifiés au moyen de l'unité de stratification (20) sont amenés au moyen de l'unité de transport (16), en particulier directement, à l'unité de remplissage (12) et sont remplis d'un produit.

8. Procédé selon l'une quelconque des revendications 5 à 7, **caractérisé en ce que** les récipients (14) sont transportés au moyen de l'unité de transport (16), en particulier continue, de l'installation de remplissage au moins à travers l'unité de stratification (20) et à travers l'unité de remplissage (12).
